# EUROPEAN PATENT SPECIFICATION

(11) **EP 4 398 837 B1**
(45) Date of publication and mention of the grant of the patent: **19.08.2026**
(21) Application number: 21956390.5
(22) Date of filing: 10.09.2021
(51) Int. Cl.: A61C 17/02

(54) **ORAL IRRIGATOR**
MUNDDUSCHE UND VERFAHREN
ORRIGATEUR BUCCAL

(43) Date of publication of application: 17.07.2024
(73) Proprietor: Colgate-Palmolive Company, New York, NY 10022 (US)
(72) Inventor: YAO, John, Yangzhou, Jiangsu 225111 (CN); ZHOU, Jiang, Yangzhou, Jiangsu 225111 (CN)
(74) Representative: Schicker, Silvia
(86) International application number: PCT/CN2021/117555
(87) International publication number: WO 2023/035206

(56) References cited:
- CN-A- 105 338 924
- CN-A- 108 542 527
- CN-A- 112 188 873
- CN-U- 204 995 600
- CN-U- 214 104 710
- US-A1- 2008 008 979
- US-A1- 2016 151 133
- US-A1- 2019 358 006
- US-A1- 2021 030 518

## Description

### BACKGROUND

Water flossers, also known as oral irrigators, have increased in popularity recently due to their ease of use and effectiveness in removing plaque from interproximal areas of a user's mouth. Conventional water flossers inject water through a nozzle to clean the areas between the teeth and at the gumline. However, conventional water flossers generally only operate in accordance with pre-defined treatment protocols, which has downsides including lack of user control in the treatment protocol and lack of precision during cleaning. Thus, a need exists for improvements to water flossers to address these deficiencies.

US 2019/358006 A1 is the closes prior art and discloses an oral irrigator comprising: a reservoir for storing a fluid; a tip in fluid communication with the reservoir; a pump configured to pump the fluid from the reservoir to the tip; a motor operably coupled to the pump to drive the pump; an activation member alterable between an actuated state and a non-actuated state; and wherein in a continuous spray mode, the fluid is continuously pumped from the reservoir to the tip while the activation member is in the actuated state. US 2019/358006 A1 further discloses an oral irrigator comprising: a reservoir for storing a fluid; a tip in fluid communication with the reservoir; a pump configured to pump the fluid from the reservoir to the tip; a motor operably coupled to the pump to drive the pump; a control module operably coupled to the motor to control the motor in accordance with a mode selected from a plurality of modes; and wherein the plurality of modes comprises a continuous spray mode during which: the fluid is continuously pumped from the reservoir to the tip while an activation member is in an actuated state as long as fluid is present in the reservoir; and the fluid is not pumped from the reservoir to the tip while the activation member is in a non-actuated state. US2019/358006 A1US further discloses that a user can operate the oral irrigator by actuating a first switch element by a short push, the oral irrigator being then switched into an ON state and a liquid jet is emitted; when the user actuates said first switching element again by a further short push, then the oral irrigator 1 is switched OFF.
US 2016/151133 A1 and US 2021/030518 A1 disclose further prior art.

### BRIEF SUMMARY

The present invention is directed to an oral irrigator. The oral irrigator may have a reservoir for storing a fluid and a tip or nozzle that is in fluid communication with the reservoir so that the fluid can be pumped from the reservoir to the tip. The oral irrigator may also include a pump for pumping the fluid, a motor for driving the pump, and a control module for controlling the operation of the motor in accordance with a mode selected by a user. The modes may include a continuous spray mode whereby the fluid is only pumped from the reservoir to the tip while a user is actuating an activation member. The modes may also include automatic spray modes whereby the fluid is pumped in accordance with pre-defined treatment protocols.

In one aspect, the invention may be an oral irrigator comprising the features of claim 1. These features include: a reservoir for storing a fluid; a tip in fluid communication with the reservoir; a pump configured to pump the fluid from the reservoir to the tip; a motor operably coupled to the pump to drive the pump; a control module operably coupled to the motor to control the motor in accordance with a mode selected from a plurality of modes; and wherein the plurality of modes comprises a continuous spray mode during which: (1) the fluid is continuously pumped from the reservoir to the tip while an activation member is in an actuated state as long as fluid is present in the reservoir; and (2) the fluid is not pumped from the reservoir to the tip while the activation member is in a non-actuated state.

In another aspect, the invention may be an oral irrigator comprising the features of claim 7. These features include: a reservoir for storing a fluid; a tip in fluid communication with the reservoir; a pump configured to pump the fluid from the reservoir to the tip; a motor operably coupled to the pump to drive the pump; an activation member alterable between an actuated state and a non-actuated state; and wherein in a continuous spray mode, the fluid is continuously pumped from the reservoir to the tip while the activation member is in the actuated state.

Yet another aspect, which is not according to the present invention, may be directed towards a method of using an oral irrigator, the method comprising: filling a reservoir of the oral irrigator with a fluid; selecting a mode from a plurality of modes, wherein the plurality of modes comprises a continuous spray mode; and wherein upon selecting the continuous spray mode, the fluid is continuously pumped from the reservoir to a tip of the oral irrigator while an activation member is actuated and the fluid is not pumped from the reservoir to the tip while the activation member is not actuated.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
FIG. 1 is a front perspective view of an oral irrigator in accordance with an embodiment of the present invention;
FIG. 2 is a schematic electrical component diagram of the oral irrigator of FIG. 1;
FIG. 3 is a diagram listing the different modes of the oral irrigator of FIG. 1;
FIG. 4 is an illustration of a portion of the oral irrigator of FIG. 1 with graphics that may be displayed thereon in accordance with the different modes shown in FIG. 3;
FIG. 5 is a flow chart describing a method of use of the oral irrigator of FIG. 1; and
FIG. 6 illustrates the oral irrigator of FIG. 1 in use to clean a user's oral cavity.

### DETAILED DESCRIPTION

The following description of the preferred embodiment(s) is merely exemplary in nature and is in no way intended to limit the invention, its application, or uses.

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivatives thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the exemplified embodiments. Accordingly, the invention expressly should not be limited to such exemplary embodiments illustrating some possible non-limiting combination of features that may exist alone or in other combinations of features; the scope of the invention being defined by the claims appended hereto.

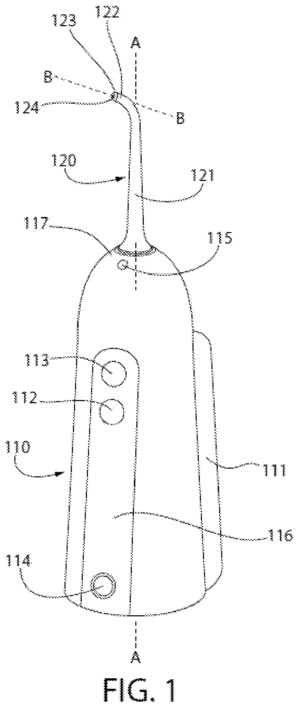

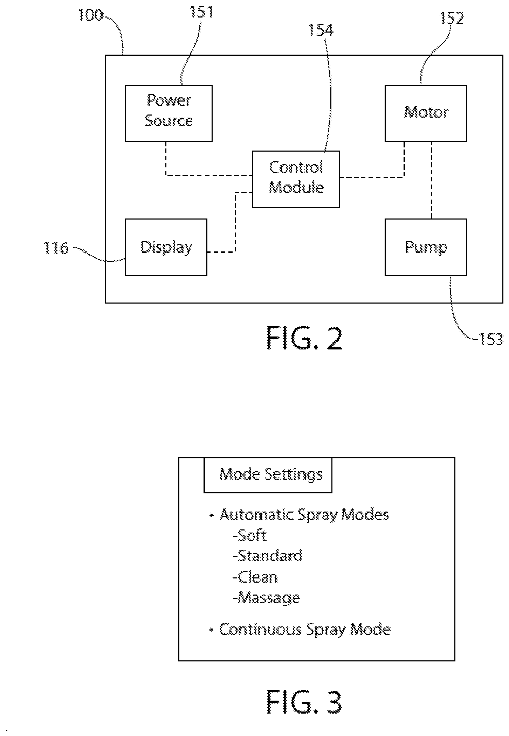

Referring first to FIG. 1, an oral irrigator 100 is illustrated in accordance with an embodiment of the present invention. The oral irrigator 100 comprises an oral irrigator handle (hereinafter "handle") 110 and an oral irrigator tip (hereinafter "tip") 120. The handle 110 is the portion of the oral irrigator 100 that is gripped by a user during use. Furthermore, the handle 110 forms a housing having an internal cavity (not shown) that houses the various electronic components necessary for proper operation of the oral irrigator 100. Thus, for example, the handle 110 may house a power source such as a battery, a motor, a pump, and any other electronic components that may be required for operation (discussed in some detail with reference to FIG. 2). In some embodiments, the handle 110 may also house a control module or processor or controller that controls operation of the motor and the pump in accordance with a mode selected by a user. The handle 110 may include a reservoir or tank 111 that holds a supply of a fluid, such as water, that is intended to be injected or otherwise introduced into a user's oral cavity during use. In other embodiments, the handle 110 may be fluidly coupled directly to a showerhead, faucet, or other fluid source in order to be supplied with the fluid that is to be introduced into the user's oral cavity during use.

The reservoir 111 may be an integral part of the handle 110 in some embodiments, such that the handle 110 itself defines an interior space for holding fluid that is fluidly isolated from any electronic components that might be damaged by contact with a fluid. In other embodiments, the reservoir 111 may be formed as a separate component or housing that is detachably coupled to the main body of the handle 110. In either case, there should be an opening through which a fluid can be introduced into the reservoir 111, and a cap that can seal the reservoir 111 so that the fluid placed therein does not leak through the opening. In some embodiments whereby the reservoir 111 is a separate component from the main body of the handle 110, the reservoir 111 may only be filled when detached from the handle 110. In other embodiments, the reservoir 111 may be filled whether it is attached to or detached from the handle 110.

In the exemplified embodiment, the handle 110 comprises an activation member 112, a mode selection member 113, a charging interface 114, and an unlock button 115. The activation member 112 may be a pushbutton switch, such as a power button, that is actuated by a user pressing downwardly thereon to actuate the activation member 112. Thus, the pushbutton switch may only be in the actuated state while the pushbutton switch is being physically pushed by a user, and the pushbutton switch will automatically alter back into the non-activated state when a user releases the pressure being applied thereon. However, the invention is not to be so limited in all embodiments and the activation member 112 can take on other forms, such as being a slide switch that is slid between actuated and non-actuated positions, a capacitive touch sensor that is actuated when contacted by a user's fingers or thumb or the like, a selector switch, a joystick switch, a toggle switch, a pressure switch, or the like in other embodiments. The activation member 112 may be a type of hand switch that is actuated by human touch.

The activation member 112 may control several operating functions of the oral irrigator 110. Specifically, a single actuation of the activation member 112 may alter the oral irrigator 100 from an off state to a non-operational on state. A second single actuation of the activation member 112 may alter the oral irrigator 110 from a non-operational on state to an operational on state whereby the oral irrigator 100 is made to dispense the fluid from the reservoir 110 through the tip 120. Another actuation of the activation member 112 (perhaps a longer actuation) may alter the oral irrigator 110 from the on state (either operational or non-operational on state) back to the off state. In some embodiments, depending on the mode selected for operation of the oral irrigator, a single actuation of the activation member 112 may cause the oral irrigator 100 to automatically dispense the fluid for a pre-determined treatment time associated with a treatment regimen (i.e., automatic spray modes). In other modes, and specifically a continuous spray mode described herein below, the oral irrigator 100 may only dispense the fluid while the activation member 112 is being actuated. Thus, if the oral irrigator 100 is in the continuous spray mode, the oral irrigator 100 will continuously dispense the fluid while the activation member 112 is being actuated and will not dispense the fluid while the activation member 112 is not being actuated.

The mode selection member 113 may be a pushbutton switch or any other type of switch as identified above with reference to the activation member 112. In the exemplified embodiment, the mode selection member 113 is a pushbutton switch such that a user presses the mode selection member 113 downwardly to actuate the same. The mode selection switch 113 enables a user to select a desired mode, such as a soft mode, a standard mode, a clean mode, a massage mode, and a continuous spray mode, etc. These modes will be described in greater detail below with reference to FIG. 3. In some embodiments, upon powering on the device, the user may actuate the mode selection member 113 until the desired mode has been selected, and then may actuate the activation member 112 to activate the device and cause the pump to pump the fluid from the reservoir 111 to the tip 120 in accordance with the selected mode. Of course, the user may select the mode before powering on the device in other embodiments. The oral irrigator 100 may include a control module that stores instructions related to the spray pattern, pressure, velocity, and the like associated with each of the different modes.

The charging interface 114 enables the oral irrigator 100 to be coupled to a power adaptor so that the power source of the oral irrigator 100 can be charged. The unlock button 115 may be depressed when it is desired for a user to remove the tip 120 from the handle 110. Specifically, a user may actuate the unlock button 115, which then allows the user to separate the tip 120 from the handle 110 when it is needed for replacement, cleaning, or any other purpose. The handle 110 may include a display screen 116 to display the mode, battery status, cleaning regimen information, or any other information as may be desired.

As seen in FIG. 1, the handle 110 of the oral irrigator 100 has a top end 117, and the tip 120 is connected to the handle 110 at the top end 117 so that the tip 120 protrudes upwardly from the top end (or distal end) 117 of the handle 110. The handle 110 may have an opening in the top end 117 through which the tip 120 can be inserted for purposes of coupling the tip 120 to the handle 110. In the exemplified embodiment, the tip 120 comprises a first portion 121 that protrudes from the handle 110 along a first axis A-A and a second portion 122 that extends from the first portion along a second axis B-B that is angled relative to the first axis A-A. In the exemplified embodiment, the second axis B-B is angled upwardly with distance from the first portion 121 such that the first and second axes A-A, B-B intersect at an obtuse angle. Of course, the invention is not to be so limited and the first and second axes A-A, B-B may intersect at an acute angle or a perpendicular angle in alternative embodiments. The second portion 122 of the tip 120 terminates in a distal end 123 of the tip 120, and the tip 120 comprises an outlet 124 at the distal end 123 through which fluid that is pumped from the reservoir 111 to the tip 120 may be dispensed into the user's oral cavity.

Referring to FIG. 2, the electronic components of the oral irrigator 100 will be described in accordance with an embodiment of the present invention. In the exemplified embodiment, the oral irrigator 100 comprises a power source 151, a motor 152, a pump 153, and a control module 154 that are all operably coupled together. In the exemplified embodiment, the power source 151 and the motor 152 are coupled to the control module 154 and the motor 152 is in turn coupled to the pump 153. Other manners of coupling the various electronic components together may be used in other embodiments. As noted above, the power source 151, the motor 152, the pump 153, and the control module 154 may be located within a cavity that exists inside of the handle 110. The electronic components may be properly positioned within the handle 110 so that the pump 153 is fluidly coupled to any fluid in the reservoir 111 and so that the motor 152 is coupled to the pump 153 such that when the motor is operating, it is driving the pump 153 to pump the fluid from the reservoir 111 to the tip 120 for dispensing through the outlet 124 of the tip 120. FIG. 2 also illustrates the display 116 being operably coupled to the control module 154 so that the control module 154 can control power supply to the display 116 and can control the visual representation displayed on the display 116.

The power source 151 may be a battery, such as a rechargeable battery that can be recharged using a power adapter and the charging interface 114. In other embodiments, the power source 151 may be a power cord that is plugged directly into a wall outlet to provide power to the oral irrigator 100. The motor 152 and the pump 153 are coupled together such that when the motor 152 is activated, the pump 153 is pumping the fluid from the reservoir 111 to the tip 120. In that regard, the pump 153 is in fluid communication with the reservoir 111 to enable the pump 153 to pump the fluid from the reservoir 111 to the tip 120 during operation. The specific characteristics of the pump 153 and the motor 152 may be selected based on desired flow rate, flow velocity, pressure, and the like.

The control module 154 (also referred to as a controller or a processor or a control unit) may be any device configured to receive data and/or store instructions and to control the operation of other electronic components, such as the motor 152 and the pump 153, in response to receipt of input or data or in response to stored instructions. The control module 154 is also operably coupled to the activation member 112 and the mode selection member 113. As such, the control module 154 receives input from the activation member 112 and the mode selection member 113, and the control module 154 controls the operation of the motor 152 and hence also the pump 153 based on the input received from the activation and mode selection members 112, 113. For example, when the oral irrigator is in an off state and the activation member 112 is actuated, a signal is sent to the control module 154 to power on the oral irrigator 100. Then, when the mode selection member 113 is actuated and a mode is selected, a signal is sent to the control module 154 regarding the mode selected. Finally, when the activation member 112 is again actuated, the control module 154 will control operation of the motor 152 and the pump 153 in accordance with the selected mode based on data, instructions, or other information stored in a memory of the control module 154.

The control module 154 may in some embodiments comprise a processor and a memory device. The processor and memory device may be separate components, or the memory device may be integrated with the processor within the control unit 154. Furthermore, the control unit 154 may include only one processor and one memory device, or it may include multiple processors and multiple memory devices. The processor of the control unit 154 may be any computer or central processing unit (CPU), microprocessor, micro-controller, computational device, or circuit configured for executing some or all of the processes described herein, including without limitation activation and deactivation of the motor 152 and/or activation and deactivation of the pump 153 based on the mode selected by the user.

The memory device of the control unit 154 may include, without limitation, any suitable volatile or non-volatile memory including random access memory (RAM) and various types thereof, read-only memory (ROM) and various types thereof, USB flash memory, and magnetic or optical data storage devices (e.g. internal/external hard disks, floppy discs, magnetic tape CD-ROM, DVD-ROM, optical disk, ZIP^{™} drive, Blu-ray disk, and others), which may be written to and/or read by the processor which is operably connected thereto. The memory device may store algorithms and/or calculations that can be used (by the processor) to determine when to activate/deactivate the motor 152 and/or the pump 153. The memory may store instructions related to operation characteristics depending on which mode the oral irrigator 100 is operating under. Thus, a user may select a mode for operation, and the control module 154 may alter the operation such as by altering the speed of the motor or the like in dependence on the selected mode. The memory of the control module 154 may store different instructions for each mode to ensure that the motor 152 operates in accordance with the selected mode.

Referring to FIG. 3, the modes associated with the oral irrigator 100 will be described. As discussed herein, a user can select a mode for operation of the oral irrigator 100 prior to final activation of the oral irrigator 100 to dispense the fluid into the user's oral cavity. As such, the selection of the mode will dictate the manner in which the fluid is dispensed, such as by changing the velocity of the fluid, the flow rate of the fluid, the pulsing of the fluid as it is dispensed, and the like. In the exemplified embodiment, a change in the mode may change the duty cycle of the motor 152.

The oral irrigator 100 has a plurality of mode settings, including a plurality of automatic spray modes and a continuous spray mode. When the oral irrigator is operating in accordance with one of the plurality of automatic spray modes, the oral irrigator 100 will pump the fluid from the reservoir 111 to the tip 120 for dispensing into the user's oral cavity automatically for a pre-determined period of time (i.e., treatment time) associated with a treatment regimen or protocol. That is, when a user selects one of the automatic spray modes and then actuates the activation member 112 to begin a treatment regimen, the oral irrigator 100 will continue to spray the fluid automatically in accordance with the specifications of the particular mode that was selected. In some embodiments, a treatment time associated with an oral care regimen is two minutes. In such a scenario, upon the user selecting one of the automatic spray modes and actuating the activation member 112 a single time, the oral irrigator 100 will spray the fluid into the oral cavity in accordance with the specifications of the selected mode for the two minute time period, after which time the oral irrigator 100 will automatically stop spraying the fluid without further user intervention required. The user is not required to continue actuating the activation member 112 during the treatment time. Rather, just a single actuation to initiate the treatment regimen is all that is needed. In some embodiments, if a user were to actuate the activation member 112 during the treatment time while the oral irrigator 100 is operating in an automatic spray mode, such actuation of the activation member 112 may power the oral irrigator off prior to the end of the treatment time.

In the exemplified embodiment, the automatic spray modes comprises a first automatic spray mode (i.e., soft mode), second automatic spray mode (i.e., standard mode), a third automatic spray mode (i.e., clean mode), and a fourth automatic spray mode (i.e., massage mode). Of course, fewer than all of these modes may be available in some embodiments. In each of these modes, the frequency may be approximately 250 Hz. What differs among the modes of the automatic spray modes is the duty cycle. Thus, the first or soft mode may have a first duty cycle, the second or standard mode may have a second duty cycle, the third or clean mode may have a third duty cycle, and the fourth or massage mode may have a fourth duty cycle, with each of the first, second, third, and fourth duty cycles being different from one another. In one embodiment, the first duty cycle is between 60% and 70%, the second duty cycle is between 70% and 80%, and the third duty cycle is between 80% and 90%. The fourth duty cycle may cycle between 60% and 90%, as discussed further below.

Furthermore, in the exemplified embodiment, each of the first, second, third, and fourth duty cycles may fluctuate between a minimum duty cycle and a maximum duty cycle at set intervals during a treatment regimen. In some embodiments, a difference between the maximum duty cycle and the minimum duty cycle for each of the first, second, and third modes may be no greater than 5%.

In one particular embodiment, the first automatic spray mode (the soft mode) may have a duty cycle having a minimum duty cycle of about 60% and a maximum duty cycle of about 64%, with the duty cycle switching between the minimum and maximum duty cycles at set intervals during a treatment time. In one particular embodiment, the second automatic spray mode (the standard mode) may have a duty cycle having a minimum duty cycle of about 75% and a maximum duty cycle of about 80%, with the duty cycle switching between the minimum and maximum duty cycles at set intervals during a treatment time. In one particular embodiment, the third automatic spray mode (the clean mode) may have a duty cycle having a minimum duty cycle of about 86% and a maximum duty cycle of about 90%, with the duty cycle switching between the minimum and maximum duty cycles at set intervals during a treatment time. As used in this paragraph, the term "about" allows for a tolerance of plus or minus 3% from the provided value. The set intervals may be between 0.1ms and 2ms, and more specifically between 0.4ms and 0.6ms, and still more specifically approximately 0.5ms (with approximately including a tolerance of plus/minus 5%). Furthermore, the treatment time may be between one minute and two minutes, and may be specifically two minutes in some embodiments.

The fourth duty cycle of the fourth automatic spray mode (the massage mode) is a bit different than the others. The duty cycle of the fourth automatic spray mode may have a minimum duty cycle of about 60% and a maximum duty cycle of about 90%. The duty cycle of the fourth automatic spray mode may be maintained at the minimum duty cycle for 150ms and then at the maximum duty cycle for 300ms during a total treatment time (which may be two minutes as set forth above). Thus, in the massage mode the duty cycle spends more time (twice the amount of time) in the maximum duty cycle than in the minimum duty cycle. Once again, the use of the term "about" in this paragraph includes a tolerance of plus or minus 3%.

As noted herein, the modes may also include the continuous spray mode. When the oral irrigator 100 is in the continuous spray mode, it only operates to pump the fluid from the reservoir 100 to the tip 120 while the activation member 112 is being actuated. Thus, if the user sets the oral irrigator 100 to operate in the continuous spray mode, the oral irrigator 100 will not pump the fluid from the reservoir 111 to the tip 120 unless the user is physically actuating the activation member 112. When the activation member 112 is a depressible pushbutton, this means that the fluid will not be pumped to the tip 120 unless the user is applying a force onto the pushbutton to depress the pushbutton. Furthermore, when the oral irrigator 100 is in the continuous spray mode, the oral irrigator 100 will continually pump the fluid from the reservoir 111 to the tip 120 (so long as fluid is present in the reservoir 111) while the activation member 112 is actuated. So, if the user holds down the activation member 112 for ten seconds and then releases the activation member 112, the oral irrigator 100 will pump the fluid from the reservoir 111 to the tip 120 (and hence into the oral cavity via the outlet 124 in the tip 120) for those ten seconds. As soon as the user releases the activation member 112 (or otherwise stops actuating the activation member 112), the oral irrigator 100 will no longer pump the fluid from the reservoir 111 to the tip 120. Thus, when in the continuous spray mode, the fluid is continuously pumped from the reservoir 111 to the tip 120 while the activation member 112 is in the actuated state as long as fluid is present in the reservoir, and the fluid is not pumped from the reservoir 111 to the tip 120 while the activation member 112 is not being actuated.

To summarize, during operation of the oral irrigator 100 in any of the automatic spray modes, the oral irrigator 100 pumps the fluid from the reservoir 111 to the tip 120 automatically for a predetermined period of time without a user having to continually actuate the activation member 112. That is, once one of the automatic spray modes is selected, the user may actuate the activation member 112 a single time, and then the oral irrigator 100 will pump the fluid in accordance with the selected mode (and any instructions stored in the control module 154 based on the selected mode) for the duration of the treatment protocol. Differently, during operation of the oral irrigator in the continuous spray mode, the oral irrigator 100 only pumps the fluid from the reservoir 111 to the tip 120 while the user is actively actuating the activation member 112. So, if the user presses and quickly releases the activation member 112 when the oral irrigator 100 is in the continuous spray mode, just a single quick spurt of the fluid will be pumped and sprayed. If the user holds down the activation member 112, the fluid will be continuously pumped and sprayed for as long as the user holds down (or otherwise actuates) the activation member 112).

The continuous spray mode has several advantages. In the automatic spray modes, the spray continues during the treatment time even as the user is moving the nozzle from one interproximal area to another. This results in wasted fluid that is not directed into the desired areas. With the continuous spray mode, the user can release or stop actuating the activation member 112 while moving the nozzle between interproximal regions of the mouth or other areas that the user desires to clean. Thus, the user can control when the oral irrigator 100 is and is not spraying the fluid, rather than having the fluid be sprayed continuously for the treatment duration. This also allows a user to take better advantage of the water tank. With an automatic spray mode, the water tank may run out of fluid before the treatment is complete. With the continuous spray mode, a user can control the spray and can conserve the fluid as needed to focus on the areas that the user wants to spray the fluid. Finally, the continuous spray mode provides the user with a sense of control that is generally absent from the automatic spray modes. The user can more precisely and efficiently clean the areas of the oral cavity that the user desires to clean using the continuous spray mode because the user can control the on/off of the spraying of the fluid.

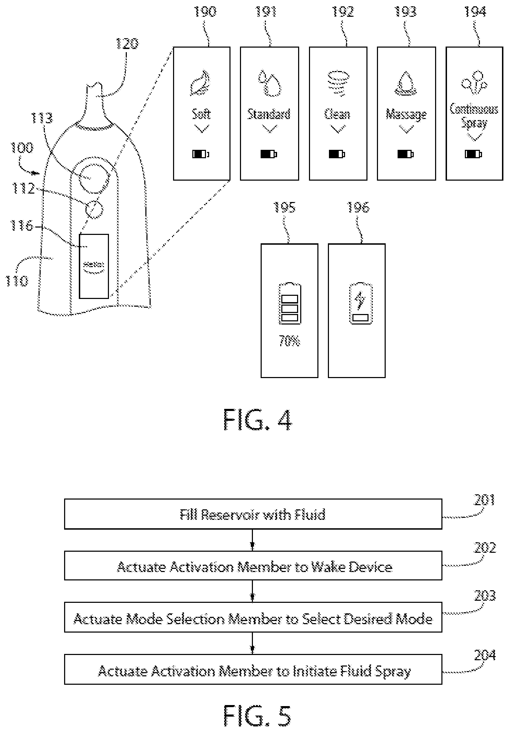

Referring to FIG. 4, a portion of the oral irrigator 100 which includes the display 116 is illustrated in accordance with an embodiment of the present invention. The purpose of this figure is to illustrate the different visual representations that may be displayed on the display 116 at different times during operation of the oral irrigator 100. The display 116 on the oral irrigator 100 is displaying the text "Hello." This is intended to illustrate a sample visual representation that may be displayed upon a user powering the oral irrigator 100 from the off state to the non-operational on state. That is, when a user presses the activation member 112 and powers the oral irrigator 100 from the off state to the non-operational on state, a welcoming message, such as the text "Hello," may be displayed on the display 116. Of course, the text "Hello" is merely exemplary and is not intended to be limiting of the visual representation that may be provided in the display 116 upon start-up of the oral irrigator 100.

FIG. 4 then shows alternative visual representations that may be present on the display 116. After the user powers the oral irrigator 100 from the off state to the non-operational on state, the user can actuate the mode selection member 113 to select a mode at which the user desires to operate the oral irrigator 100. Each time the user actuates the mode selection member 113 (such as by pressing a mode selection pushbutton), the visual representation on the display 116 may change to provide the user with a visual representation of the currently selected mode. Thus, the various visual representations includes a soft mode visual representation 190, a standard mode visual representation 191, a clean mode visual representation 192, a massage mode visual representation 193, and a continuous spray mode visual representation 194. Once the oral irrigator 100 is powered on, a user can scroll through the various modes with successive actuations of the mode selection member 113. Each time the user actuates the mode selection member 113, the visual representation on the display 116 will change among the various visual representations 190-194. Once the user selects a mode, the user can actuate the activation member 112 to initiate the treatment protocol (or, in the case of the continuous spray mode, to initiate/control spraying of the fluid).

As shown, each of the visual representations 190-194 also includes a power source status icon which depicts the power level of the power source 151. Thus, in some embodiments the status/power level of the power source 151 may be displayed along with each mode display. The power source status icon could be omitted in other embodiments. The display 116 may also display a battery status icon 195 which graphically illustrates the power level of the power source only, without also providing information about a mode. The display 116 may also display a battery charging icon 196 which is displayed when the oral irrigator 100 is being charged via the charging interface/port 114. While the display 116 is depicted as a screen, such as an LCD screen, the invention is not to be so limited. In other embodiments, the display 116 may comprise a plurality of lights adjacent to text representing a specific mode, such that the light adjacent to the text with the selected mode is illuminated. Other manners of displaying information to a user may also be incorporated into the oral irrigator 100.

Referring to FIG. 5, operation of the oral irrigator 100 will be described. First, at step 201, a user fills the reservoir 111 with a fluid, such as water. As mentioned previously, a user may detach the tank/reservoir 111 from the main body of the handle 110 to fill the reservoir 111, although this is not required in all embodiments. In other embodiments, the user may access the reservoir 111 for filling even while the reservoir 111 remains attached to the rest of the handle 110. Although water is described as the fluid, in other embodiments the fluid may be mouthwash or other fluids that are desired to be introduced into the oral cavity to perform a cleaning and/or provide a therapeutic, antibacterial, sensitivity, fresh breath, or the like benefit to the user.

Next, as shown at step 202, the user may actuate the activation member 112 to wake up the oral irrigator 110. In particular, prior to actuating the activation member 112, the oral irrigator 110 will be in an off state. Upon a first actuation of the activation member 112, the oral irrigator 110 will alter from the off state to a non-operational on state (i.e., a wake state). In the non-operational on state, the pump 153 is not operating. However, in the non-operational on state, the power source 151 may supply power to the display 116 so that the display 116 can visually display a graphical or visual representation that will indicate to the user that the oral irrigator 100 is in the non-operational on state. This may include the display 116 displaying some graphical representation (such as the word "Hello" as shown in FIG. 5) indicating that the oral irrigator 100 is powered on. Alternatively, the display 116 may comprise light indicators instead of a screen such that a light is illuminated in a particular color or arrangement to indicate that the oral irrigator 100 is in the non-operational on state. As noted above, after the first actuation of the activation member 112 (which may be simply pressing a power button as described above), the oral irrigator 100 does not pump the fluid from the reservoir 111 to the tip 120. This is to enable a user to have an opportunity to select a mode for operation prior to the fluid being pumped to the tip 120. In other embodiments, a user may select the mode prior to powering on the device, and the device may start pumping the fluid after the first actuation of the activation member 112.

Next, at step 203, after the oral irrigator 110 has been woken up (i.e., activated into the non-operational on state, also referred to herein as an initial powered state), the user may press the mode selection member 113 until the desired mode has been selected. That is, the user may actuate the mode selection member 113 any number of times as needed until the desired mode has been selected. In one embodiment, a single actuation of the mode selection member 113 may select the soft mode. If the user does not want to operate in the soft mode, the user may actuate the mode selection member 113 again to select the standard mode. If the user does not want to operate in the standard mode the user may actuate the mode selection member 113 again to select the clean mode. If the user does not want to operate in the clean mode the user may actuate the mode selection member 113 again to select the massage mode. If the user does not want to operate in the massage mode the user may actuate the mode selection member again 13 to select the continuous spray mode. Of course, the specific modes available and the specific order at which they may be selected is not limiting of the invention.

The modes may be displayed on the display 116, which is located on the front face of the handle 111 in the exemplified embodiment. The display 116 could be located on the rear surface or at other locations along the handle 110 in other embodiments. The display 116 may be a screen-type display, or it may comprise a plurality of illumination elements positioned adjacent to text or other indicia indicative of the various modes. As the user scrolls through the modes, the display 116 will display some indication of the specific mode that has currently been selected. The oral irrigator 100 will not begin to operate and pump/spray fluid until the activation member 113 is once again actuated, so the user can continue to scroll through the modes as described herein for as long as desired.

Once the desired mode has been selected, at shown at step 204, the user may actuate the activation member 112 again, which will activate the motor 152 and/or pump 153. Thus, when the user presses or otherwise actuates the activation member 112 after selection of the mode in step 203, the distal end of the tip 120 which contains the outlet 124 should be located within the user's mouth. At this point, the fluid from the reservoir 111 will flow through the tip 120 and out of the outlet of the tip 120 into the user's oral cavity. The user can move the outlet of the tip 120 along the teeth, interproximal regions, gum line, and the like to perform cleaning of those regions of the oral cavity. The oral irrigator 100 may power down automatically after a predetermined period of time, or a user may be required to press the activation member 112 to power down the device after the user has completed their cleaning regimen.

As noted above, the control module 154 may control the operation of the motor 152 and pump 153 in accordance with the selected mode. Thus, if one of the automatic spray modes is selected at step 203, then once the activation member 112 is actuated at step 204 the control module 154 will cause the motor 152 and pump 153 to operate in accordance with the selected mode automatically for the duration of the treatment time. This includes operating the motor 152 at a duty cycle associated with the selected mode. This may also include automatically stopping spray of the fluid after expiration of the treatment time (for example, two minutes). The control module 154 may contain instructions associated with each mode such that once the mode is selected, the control module 154 can control operation of the motor 152 in accordance with the stored instructions corresponding to the selected mode.

Of course, operation is not quite as described above if the continuous spray mode is selected at step 203. If the continuous spray mode is selected, the oral irrigator 100 will not pump the fluid from the reservoir 111 to the tip 120 for spraying unless the activation member 112 is being actuated. Thus, the user may select the continuous spray mode at step 203 and then position the outlet 124 of the tip 120 into the user's mouth. The user may then actuate and release the activation member 112 (in particular when the activation member 112 is a pushbutton switch) as desired to spray (and not spray) the fluid into the oral cavity. This allows the user to have complete control over the timing at which the fluid is sprayed out of the outlet 124. When the user is actuating the activation member 112, the motor 152 and the pump 153 are operating to pump the fluid from the reservoir 111 to the tip 120. When the user is not actuating the activation member 112, the motor 152 and the pump 153 are not pumping the fluid from the reservoir 111 to the tip 120.

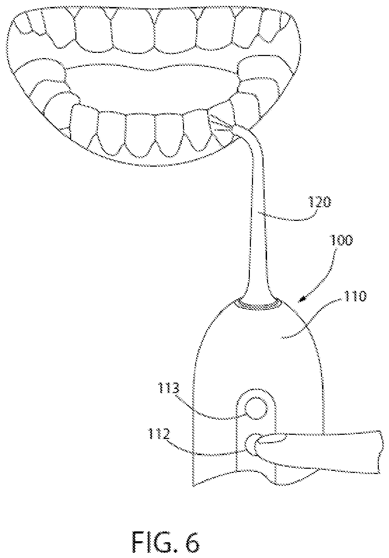

FIG. 6 illustrates the oral irrigator 100 being used to spray a user's oral cavity. The oral irrigator 100 is in the operational powered state and is currently spraying fluid. Furthermore, in this embodiment the oral irrigator 100 may be operating in accordance with the continuous spray mode. Thus, the user's finger is illustrated in contact with the activation member 112 such that the user is actuating the activation member 112, which is thereby causing the pump 154 to pump the fluid from the reservoir 111 to the tip 120 for dispensing/spraying into the oral cavity. In the continuous spray mode, if the user were to release the activation member 112 or otherwise stop actuating the activation member 112, the oral irrigator 100 would immediately stop spraying the fluid, as discussed in detail herein. In the automatic spray modes, the oral irrigator 100 would spray the fluid for a pre-determined treatment duration regardless of whether the user is continually actuating the activation member 112.

As used throughout, ranges are used as shorthand for describing each and every value that is within the range. Any value within the range can be selected as the terminus of the range. In the event of a conflict in a definition in the present disclosure and that of a cited reference, the present disclosure controls.

While the invention has been described with respect to specific examples including presently preferred modes of carrying out the invention, those skilled in the art will appreciate that there are numerous variations and permutations of the above described systems and techniques. It is to be understood that other embodiments may be utilized and structural and functional modifications may be made without departing from the scope of the present invention. Thus, the scope of the invention should be construed broadly as set forth in the appended claims.

## Claims

1. An oral irrigator (100) comprising:
a reservoir (111) for storing a fluid;
a tip (120) in fluid communication with the reservoir (111);
a pump (153) configured to pump the fluid from the reservoir (111) to the tip (120);
a motor (152) operably coupled to the pump (153) to drive the pump (153);
a control module (154) operably coupled to the motor (152) to control the motor (152) in accordance with a mode selected from a plurality of modes; and
a mode selection member (113);
wherein the plurality of modes comprises a continuous spray mode during which: (1) the fluid is continuously pumped from the reservoir (111) to the tip (120) while an activation member (112) is in an actuated state as long as fluid is present in the reservoir (111); and (2) the fluid is not pumped from the reservoir (111) to the tip (120) while the activation member (112) is in a non-actuated state; and
wherein during operation a user actuates the activation member (112) to wake the oral irrigator (100) from an off state to a non-operational on state, the user actuates the mode selection member (113) to select one of the plurality of modes, and then the user actuates the activation member (112) again to alter the oral irrigator (100) from the non-operational on state to an operational on state whereby the oral irrigator (100) pumps the fluid from the reservoir (111) to the tip (120) in accordance with the selected one of the plurality of modes, and wherein when in the continuous spray mode, continuous actuation of the activation member (112) is required to pump the fluid from the reservoir (111) to the tip (120).

2. The oral irrigator (100) according to claim 1 wherein when the oral irrigator (100) is in the continuous spray mode, the fluid only flows from the reservoir (111) to the tip (120) when the activation member (112) is in the actuated state, and wherein when the oral irrigator (100) is in any mode other than the continuous spray mode, the fluid flows from the reservoir (111) to the tip (120) without the activation member (112) being in the actuated state.

3. The oral irrigator (100) according to any one of claims 1 to 2 wherein the plurality of modes comprise at least one automatic spray mode whereby the fluid is pumped from the reservoir (111) to the tip (120) without continuous actuation of the activation member (112).

4. The oral irrigator (100) according to claim 3 wherein during the at least one automatic spray mode the control module (154) activates the motor (152) to drive the pump (153) to pump the fluid from the reservoir (111) to the tip (120) for a predetermined period of time, and wherein after expiration of the predetermined period of time the motor (152) is automatically deactivated by the control module (154).

5. The oral irrigator (100) according to claim 3 or claim 4 wherein the at least one automatic spray mode comprises a plurality of the automatic spray modes including a first automatic spray mode whereby the motor (152) has a first duty cycle, a second automatic spray mode whereby the motor (152) has a second duty cycle, and a third automatic spray mode whereby the motor (152) has a third duty cycle, the third duty cycle being greater than the second duty cycle and the second duty cycle being greater than the first duty cycle.

6. The oral irrigator (100) according to any one of claims 1 to 5 wherein in the continuous spray mode, the duty cycle is 100% while the activation member (112) is in the actuated state.

7. An oral irrigator (100) comprising:
a reservoir (111) for storing a fluid;
a tip (120) in fluid communication with the reservoir (111);
a pump (153) configured to pump the fluid from the reservoir (111) to the tip (120);
a motor (152) operably coupled to the pump (153) to drive the pump (153);
an activation member (112) alterable between an actuated state and a non-actuated state;
wherein during operation a user actuates the activation member (112) to wake the oral irrigator (100) from an off state to a non-operational on state, and then the user actuates the activation member (112) again to alter the oral irrigator (100) from the non-operational on state to an operational on state whereby the oral irrigator (100) pumps the fluid from the reservoir (111) to the tip (120) in accordance with a continuous spray mode; and
wherein in the continuous spray mode, the fluid is continuously pumped from the reservoir (111) to the tip (120) while the activation member (112) is in the actuated state.

8. The oral irrigator (100) according to claim 7 wherein when the oral irrigator (100) is in the continuous spray mode, the fluid is not pumped from the reservoir (111) to the tip (120) when the activation member (112) is in the non-actuated state.

9. The oral irrigator (100) according to claim 7 or claim 8 further comprising a handle (110), the tip (120) detachably coupled to the handle (110), and wherein the activation member (112) is a button located on the handle (110).

10. The oral irrigator (100) according to claim 9, wherein the button is a pushbutton switch, and wherein the button is in the actuated state only while the pushbutton switch is being physically pressed.

11. The oral irrigator (100) according to any one of claims 7 to 10 further comprising a control module (154) operably coupled to the motor (152) to control the motor (152) in accordance with a mode selected from a plurality of modes, the plurality of modes comprising the continuous spray mode and a plurality of automatic spray modes.

## Patentansprüche

1. Munddusche (100), die umfasst:
ein Reservoir (111) zum Aufbewahren eines Fluids;
eine Spitze (120), die in Fluidverbindung mit dem Reservoir (111) steht;
eine Pumpe (153), die so konfiguriert ist, dass sie das Fluid von dem Reservoir (111) zu der Spitze (120) pumpt;
einen Motor (152), der funktionsfähig mit der Pumpe (153) gekoppelt ist, um die Pumpe (153) anzutreiben;
ein Steuermodul (154), das funktionsfähig mit dem Motor (152) gekoppelt ist, um den Motor (152) entsprechend einem aus einer Mehrzahl von Modi ausgewählten Modus zu steuern; und
ein Modusauswahlelement (113);
wobei die Mehrzahl der Modi einen Dauersprühmodus umfasst, während dessen: (1) das Fluid kontinuierlich von dem Reservoir (111) zur Spitze (120) gepumpt wird, während sich ein Aktivierungselement (112) in einem betätigten Zustand befindet, solange Fluid in dem Reservoir (111) vorhanden ist; und (2) das Fluid nicht aus dem Reservoir (111) zur Spitze (120) gepumpt wird, während sich das Aktivierungselement (112) in einem nicht betätigten Zustand befindet; und
wobei während des Betriebs ein Benutzer das Aktivierungselement (112) betätigt, um die Munddusche (100) aus einem ausgeschalteten Zustand in einen nicht betriebsbereiten eingeschalteten Zustand zu versetzen, der Benutzer das Modusauswahlelement (113) betätigt, um einen der Mehrzahl von Modi auszuwählen, und der Benutzer anschließend das Aktivierungselement (112) erneut betätigt, um die Munddusche (100) vom nicht-betriebsbereiten eingeschalteten Zustand in einen betriebsbereiten eingeschalteten Zustand zu versetzen, wodurch die Munddusche (100) ensprechend dem ausgewählten der Mehrzahl von Modi das Fluid von dem Reservoir (111) zur Spitze pumpt (120), und wobei im Dauersprühmodus eine kontinuierliche Betätigung des Aktivierungselements (112) erforderlich ist, um das Fluid von dem Reservoir (111) zur Spitze (120) zu pumpen.

2. Munddusche (100) nach Anspruch 1, wobei, wenn sich die Munddusche (100) im Dauersprühmodus befindet, das Fluid nur dann von dem Reservoir (111) zur Spitze (120) fließt, wenn sich das Aktivierungselement (112) im betätigten Zustand befindet, und wobei, wenn sich die Munddusche (100) in einem anderen Modus als dem Dauersprühmodus befindet, das Fluid von dem Reservoir (111) zur Spitze (120) fließt, ohne dass sich das Aktivierungselement (112) im betätigten Zustand befindet.

3. Munddusche (100) nach einem der Ansprüche 1 bis 2, wobei die Mehrzahl von Modi mindestens einen automatischen Sprühmodus umfasst, bei dem das Fluid ohne kontinuierliche Betätigung des Aktivierungselements (112) von dem Reservoir (111) zur Spitze (120) gepumpt wird.

4. Munddusche (100) nach Anspruch 3, wobei während des mindestens einen automatischen Sprühmodus das Steuermodul (154) den Motor (152) aktiviert, um die Pumpe (153) anzutreiben, um das Fluid für eine bestimmte Zeitspanne von dem Reservoir (111) zur Spitze (120) zu pumpen, und wobei nach Ablauf der vorbestimmten Zeitspanne der Motor (152) durch das Steuermodul (154) automatisch deaktiviert wird.

5. Munddusche (100) nach Anspruch 3 oder Anspruch 4, wobei der mindestens eine automatische Sprühmodus eine Mehrzahl von automatischen Sprühmodi umfasst, einschließlich eines ersten automatischen Sprühmodus, bei dem der Motor (152) einen ersten Arbeitszyklus aufweist, eines zweiten automatischen Sprühmodus, bei dem der Motor (152) einen zweiten Arbeitszyklus aufweist, und eines dritten automatischen Sprühmodus, bei dem der Motor (152) einen dritten Arbeitszyklus aufweist, wobei der dritte Arbeitszyklus größer ist als der zweite Arbeitszyklus und der zweite Arbeitszyklus größer ist als der erste Arbeitszyklus.

6. Munddusche (100) nach einem der Ansprüche 1 bis 5, wobei im Dauersprühmodus der Arbeitszyklus 100 % beträgt, während sich das Aktivierungselement (112) im betätigten Zustand befindet.

7. Munddusche (100), die umfasst:
ein Reservoir (111) zum Aufbewahren eines Fluids;
eine Spitze (120), die in Fluidverbindung mit dem Reservoir (111) steht;
eine Pumpe (153), die so konfiguriert ist, dass sie das Fluid von dem Reservoir (111) zu derr Spitze (120) pumpt;
einen Motor (152), der funktionsfähig mit der Pumpe (153) gekoppelt ist, um die Pumpe (153) anzutreiben;
ein Aktivierungselement (112), das zwischen einem betätigten Zustand und einem nicht betätigten Zustand umschaltbar ist;
wobei während des Betriebs ein Benutzer das Aktivierungselement (112) betätigt, um die Munddusche (100) aus einem ausgeschalteten Zustand in einen nicht betriebsbereiten eingeschalteten Zustand zu versetzen, und der Benutzer anschließend das Aktivierungselement (112) erneut betätigt, um die Munddusche (100) aus dem nicht betriebsbereiten eingeschalteten Zustand in einen betriebsbereiten eingeschalteten Zustand zu versetzen, wodurch die Munddusche (100) entsprechend einem kontinuierlichen Sprühmodus das Fluid von dem Reservoir (111) zur Spitze (120) pumpt; und
wobei im kontinuierlichen Sprühmodus das Fluid kontinuierlich von dem Reservoir (111) zur Spitze (120) gepumpt wird, während sich das Aktivierungselement (112) im betätigten Zustand befindet.

8. Munddusche (100) nach Anspruch 7, wobei, wenn sich die Munddusche (100) im Dauersprühmodus befindet, das Fluid nicht von dem Reservoir (111) zur Spitze (120) gepumpt wird, wenn sich das Aktivierungselement (112) im nicht betätigten Zustand befindet.

9. Munddusche (100) nach Anspruch 7 oder Anspruch 8, die ferner einen Griff (110) umfasst, wobei die Spitze (120) lösbar mit dem Griff (110) verbunden ist und wobei das Aktivierungselement (112) ein an dem Griff (110) angeordneter Knopf ist.

10. Munddusche (100) nach Anspruch 9, wobei der Knopf ein Druckschalter ist und wobei sich der Knopf nur dann im betätigten Zustand befindet, während der Druckschalter physisch gedrückt wird.

11. Munddusche (100) nach einem der Ansprüche 7 bis 10, die ferner ein Steuermodul (154) umfasst, das funktionsfähig mit dem Motor (152) gekoppelt ist, um den Motor (152) gemäß einem aus einer Mehrzahl von Modi ausgewählten Modus zu steuern, wobei die Mehrzahl von Modi den Dauersprühmodus und eine Mehrzahl von automatischen Sprühmodi umfasst.

## Revendications

1. Irrigateur buccal (100) comprenant:
un réservoir (111) pour stocker un fluide;
un embout (120) en communication fluidique avec le réservoir (111);
une pompe (153) conçue pour acheminer le fluide à partir du réservoir (111) vers l'embout (120);
un moteur (152) couplé fonctionnellement à la pompe (153) pour entraîner la pompe (153);
un module de commande (154) couplé fonctionnellement au moteur (152) pour commander le moteur (152) conformément à un mode sélectionné parmi une pluralité de modes; et
un organe de sélection de mode (113);
dans lequel la pluralité de modes comprend un mode de pulvérisation continu pendant lequel: (1) le fluide est pompé en continu à partir du réservoir (111) vers l'embout (120) tant qu'un organe d'activation (112) est actionné et qu'il y a du fluide dans le réservoir (111); et (2) le fluide n'est pas pompé à partir du réservoir (111) vers l'embout (120) lorsque l'élément d'activation (112) n'est pas actionné; et
dans lequel, pendant le fonctionnement, un utilisateur actionne l'organe d'activation (112) pour faire passer l'irrigateur buccal (100) d'un état d'arrêt à un état de marche non opérationnel, puis l'utilisateur actionne l'organe de sélection de mode (113) pour sélectionner un mode parmi la pluralité des modes, puis l'utilisateur actionne à nouveau l'organe d'activation (112) pour faire passer l'irrigateur buccal (100) de l'état de marche non opérationnel à un état de marche opérationnel, ce qui permet à l'irrigateur buccal (100) de pomper le fluide à partir du réservoir (111) vers l'embout (120) conformément au mode sélectionné parmi la pluralité de modes, et dans lequel, en mode de pulvérisation continue, un actionnement continu de l'organe d'activation (112) est nécessaire pour pomper le fluide à partir du réservoir (111) vers l'embout (120).

2. Irrigateur buccal (100) selon la revendication 1, dans lequel, lorsque l'irrigateur buccal (100) est en mode de pulvérisation continue, le fluide s'écoule uniquement à partir du réservoir (111) vers l'embout (120) lorsque l'organe d'activation (112) est actionné, et dans lequel, lorsque l'irrigateur buccal (100) est dans un quelconque autre mode que le mode de pulvérisation continue, le fluide s'écoule à partir du réservoir (111) vers l'embout (120) sans que l'élément d'activation (112) ne soit actionné.

3. Irrigateur buccal (100) selon l'une quelconque des revendications 1 à 2, dans lequel la pluralité de modes comprend au moins un mode de pulvérisation automatique dans lequel le fluide est pompé à partir du réservoir (111) vers l'embout (120) sans actionnement continu de l'organe d'activation (112).

4. Irrigateur buccal (100) selon la revendication 3, dans lequel, pendant l'au moins un mode de pulvérisation automatique, le module de commande (154) active le moteur (152) de manière qu'il entraîne la pompe (153) pour pomper le fluide à partir du réservoir (111) vers l'embout (120) pendant une durée prédéterminée, et dans lequel, une fois la durée prédéterminée écoulée, le moteur (152) est automatiquement désactivé par le module de commande (154).

5. Irrigateur buccal (100) selon la revendication 3 ou la revendication 4, dans lequel l'au moins un mode de pulvérisation automatique comprend une pluralité de modes de pulvérisation automatiques, notamment un premier mode de pulvérisation automatique dans lequel le moteur (152) présente un premier cycle de service, un deuxième mode de pulvérisation automatique dans lequel le moteur (152) présente un deuxième cycle de service, et un troisième mode de pulvérisation automatique dans lequel le moteur (152) présente un troisième cycle de service, le troisième rapport cyclique étant supérieur au deuxième cycle de service et le deuxième cycle de service étant supérieur au premier cycle de service.

6. Irrigateur buccal (100) selon l'une quelconque des revendications 1 à 5, dans lequel, en mode de pulvérisation continue, le cycle de service est de 100 % lorsque l'organe d'activation (112) est actionné.

7. Irrigateur buccal (100) comprenant:
un réservoir (111) pour stocker un fluide;
un embout (120) en communication fluidique avec le réservoir (111);
une pompe (153) conçue pour acheminer le fluide à partir du réservoir (111) vers l'embout (120);
un moteur (152) couplé fonctionnellement à la pompe (153) pour entraîner la pompe (153);
un organe d'activation (112) pouvant passer d'un état actionné à un état non actionné;
dans lequel, pendant le fonctionnement, un utilisateur actionne l'organe d'activation (112) pour faire passer l'irrigateur buccal (100) d'un état d'arrêt à un état de marche non opérationnel, puis l'utilisateur actionne à nouveau l'organe d'activation (112) pour faire passer l'irrigateur buccal (100) de l'état de marche non opérationnel à un état de marche opérationnel, ce qui permet à l'irrigateur buccal (100) de pomper le fluide à partir du réservoir (111) vers l'embout (120) selon un mode de pulvérisation continue; et
dans lequel, en mode de pulvérisation continue, le fluide est pompé en continu à partir du réservoir (111) vers l'embout (120) tant que l'organe d'activation (112) est actionné.

8. Irrigateur buccal (100) selon la revendication 7, dans lequel , lorsque l'irrigateur buccal (100) est en mode de pulvérisation continue, le fluide n'est pas pompé à partir du réservoir (111) vers l'embout (120) lorsque l'organe d'activation (112) n'est pas actionné.

9. Irrigateur buccal (100) selon la revendication 7 ou la revendication 8, comprenant en outre une poignée (110), l'embout (120) étant couplé de manière amovible à la poignée (110), et dans lequel l'organe d'activation (112) est un bouton situé sur la poignée (110).

10. Irrigateur buccal (100) selon la revendication 9, dans lequel le bouton est un interrupteur à bouton-poussoir, et dans lequel le bouton n'est actionné que lorsque l'interrupteur à bouton-poussoir est physiquement enfoncé.

11. Irrigateur buccal (100) selon l'une quelconque des revendications 7 à 10 comprenant en outre un module de commande (154) couplé fonctionnellement au moteur (152) afin de commander le moteur (152) conformément à un mode sélectionné parmi une pluralité de modes, la pluralité de modes comprenant le mode de pulvérisation continue et une pluralité de modes de pulvérisation automatiques.
